# EUROPÄISCHE PATENTANMELDUNG

(11) **EP 4 465 392 A1**
(43) Veröffentlichungstag der Anmeldung: **20.11.2024**
(21) Anmeldenummer: 24173230.4
(22) Anmeldetag: 30.04.2024
(51) Int. Cl.: H01M 8/0668, H01M 8/0444

(54) **VERFAHREN ZUM BETREIBEN EINER BRENNSTOFFZELLE UND BRENNSTOFFZELLEN-ANORDNUNG**

(30) Priorität: 16.05.2023 DE 102023204571
(71) Anmelder: ContiTech Techno-Chemie GmbH, 61184 Karben (DE)
(72) Erfinder: Richards, Justin, 34346 Hann. Münden (DE); Trieu, Khiem, 21073 Hamburg (DE)
(74) Vertreter: Continental Corporation

(57) **Zusammenfassung**

Die Erfindung betrifft ein Verfahren zum Betreiben einer Brennstoffzelle, insbesondere zum Einsatz in einem Straßenfahrzeug, wobei ein sauerstoffhaltiges Prozessgas der Brennstoffzelle zugeführt wird, welches aus Umgebungsluft durch gleichzeitige Anreicherung von Sauerstoff und Abreicherung von als Katalysatorgift wirkenden Bestandteilen der Umgebungsluft, insbesondere Kohlenmonoxid, mittels Gas-Gas-Separation unter Nutzung der paramagnetischen Eigenschaften des Sauerstoffs und der nicht-paramagnetischen Eigenschaften des Katalysatorgift-Bestandteils durch ein Hindurchleiten durch ein inhomogenes Magnetfeld gewonnen wird.

## Beschreibung

Die Erfindung betrifft ein Verfahren zum Betreiben einer Brennstoffzelle, insbesondere zum Einsatz in einem Straßenfahrzeug, wobei ein sauerstoffhaltiges Prozessgas der Brennstoffzelle zugeführt wird. Sie betrifft des Weiteren eine entsprechende Brennstoffzellenanordnung, insbesondere zum Einsatz in einem Straßenfahrzeug.

Brennstoffzellen sind seit Langem bekannte Vorrichtungen zur Stromerzeugung, und sie haben im Zuge der weltweiten Bemühungen für den Klimaschutz in den letzten Jahren große Beachtung gefunden, weil sie völlig ohne schädliche Emissionen arbeiten. Die Reaktion von Wasserstoff und Sauerstoff in einer Brennstoffzelle kann wie folgt beschrieben werden H₂ + 1/2 O₂ -> H₂O + 2e-.

Aktuelle Brennstoffzellenanwendungen in Fahrzeugen benötigen für den Betrieb Sauerstoff aus der Luft und Wasserstoff aus einem Hochdruck-Speicher. Der Sauerstoff wird direkt aus der Luft gewonnen. Der Anteil vom Sauerstoff in der Luft beträgt im Normalfall 21%, so dass für den Betrieb einer H₂ PEM-Brennstoffzelle ein Überdruck auf der Kathoden (Luft)-Seite erzeugt werden muss, um den geringen Anteil an Sauerstoff im Verhältnis zu ~100% Wasserstoff auf der Anodenseite auszugleichen.

Um ein Brennstoffzellenfahrzeug in jeder Umgebung betreiben zu können, sind aufwendige Filtermechanismen notwendig, die lediglich die saubere Luft in die Brennstoffzelle einströmen lassen. Denn neben der oben beschriebenen Reaktion kann es zu Nebenreaktionen kommen, die entweder die Effizienz der Zelle oder sogar die Lebensdauer der Zellen reduziert. Zum Beispiel ist COₓ, speziell CO, als Katalysatorgift bekannt und darf nicht auf die reaktiven Flächen der Membran auf der Kathodenseite gelangen. Es ist notwendig, die Filter kontinuierlich im Betrieb auszutauschen, um die Fiterwirkung nicht unter ein entsprechendes Niveau fallen zu lassen.

Aus der EP 0 878 859 B1 ist ein Brennstoffzellensystem mit Mitteln zur Sauerstoffanreicherung von Oxidationsgas bekannt, welches auf der Ausnutzung der paramagnetischen Eigenschaften des Sauerstoffs beruht und für den Einsatz in einem Straßenfahrzeug vorgesehen ist.

Der Erfindung liegt die Aufgabe zu Grunde, ein alternatives Verfahren und eine alternative Brennstoffzellenanordnung anzugeben, die insbesondere hinsichtlich der o. a. Ausfilterung von in der Umgebungsluft enthaltenen Katalysatorgiften eine Verbesserung bieten.

Diese Aufgabe wird in ihrem Verfahrensaspekt durch ein Verfahren mit den Merkmalen des Anspruchs 1 und in ihrem Vorrichtungsaspekt durch eine Brennstoffzellenanordnung mit den Merkmalen des Anspruchs 6 gelöst. Zweckmäßige Fortbildungen des Erfindungsgedankens sind Gegenstand der jeweiligen abhängigen Ansprüche.

Die Erfindung schließt den Gedanken ein, ein der Brennstoffzelle zuzuführendes Prozessgas, in dem Sauerstoff angereichert ist und in dem als Katalysatorgifte wirkende Bestandteile der Umgebungsluft abgereichert sind, in synergistischer Weise unter Ausnutzung der paramagnetischen Eigenschaften des Sauerstoffs und der nicht-paramagnetischen Eigenschaften der erwähnten Katalysatorgifte in einem Gas-Gas-Separator zu gewinnen.

Durch die Idee der Separation des Sauerstoffs aus der Luft könnte das gesamte Filtersystem deutlich reduziert werden, die Wartungsintervalle deutlich verlängert bzw. auf Filter komplett verzichtet werden.

Die Idee basiert darauf, dass das Sauerstoffmolekül O₂ paramagnetisch ist. Diese Eigenschaft ist in der Luft ausschließlich im Sauerstoff O₂ und in NO₂ zu finden. Alle anderen Gase sind nicht paramagnetisch. Dies ermöglicht ein kaskadiertes "Filtersystem", welches ohne bewegliche bzw. austauschbare Teile auskommt und am Ende einen hoch reinen Gasstrom, der weitgehend aus O₂ besteht, liefern kann. Mit diesem "Filtersystem" lässt sich die Kathode der Brennstoffzelle so speisen, dass keine katalysatorschädigenden Gase in die Brennstoffzelle gelangen und ein herkömmlicher Filter deutlich länger betrieben werden kann. Zudem lässt sich durch die Anpassung der Fluidkanäle mittels bionischer Strukturen der Druckverlust in so einem kaskadierten System deutlich verringern, was wiederum die Leistungsaufnahme der benötigten Pumpe bzw. eines Verdichters verringert und somit die Effizienz des Gesamtsystems deutlich verbessert.

Die Idee kann für Brennstoffzellenfahrzeuge sowie Antriebe von Schiffen, Flugzeugen oder Drohnen, aber auch für stationäre Brennstoffzellen genutzt werden.

Wie oben bereits angesprochen, wird in einer Ausführung des Verfahrens wie auch der Anordnung die Umgebungsluft kaskadenartig mehrfach in Teilströme unterteilt und vor jedem Verzweigungspunkt durch ein über den Stromquerschnitt inhomogenes Magnetfeld geführt. Hierdurch wird jeweils ein Nutz-Teilstrom gebildet, in dem der paramagnetische Sauerstoff angereichert und der als Katalysatorgift wirkende nicht-paramagnetische Bestandteil abgereichert sind, und der letzte Nutz-Teilstrom als Prozessgas der Brennstoffzelle zugeführt.

In einer Ausgestaltung dieser Ausführung wird mindestens ein Teil der Nutz-Teilströme derart gebildet, dass in ihnen zugleich der Gehalt an Feststoffpartikeln verringert ist. Alternativ hierzu kann bereits vor der Unterteilung der Umgebungsluft in Teilströme Feststoffpartikel abgeschieden werden.

Die Verringerung des Gehalts bzw. die Abscheidung der Feststoffpartikel wird in einer weiteren Ausgestaltung unter Nutzung der Schwerkraft oder des Zyklon-Effekts ausgeführt. In einer technisch leicht und kostengünstig realisierbaren und daher aus derzeitiger Sicht bevorzugten Ausführung vorgeschlagenen Anordnung umfassen die Magnetmittel an einer Seite stromaufwärts eines jeweiligen Verzweigungspunktes angeordnete Permanentmagnete. Alternativ hierzu kann vorgesehen sein, dass die Magnetmittel mindestens einen stromaufwärts jeweils eines Verzweigungspunktes angeordneten Elektromagneten umfassen.

In einer weiteren Ausführung der vorgeschlagenen Anordnung ist mindestens einer der ersten Kanäle (Nutzstromkanäle) im Gas-Gas-Separator derart positioniert und/oder konfiguriert und/oder mit einem Filtermittel versehen, so dass der Gehalt an Feststoffpartikeln des in ihn einströmenden Teilstroms verringert wird. Alternativ hierzu kann vorgesehen sein, dass eingangsseitig des Gas-Gas-Separators ein Feststoffabscheider vom Zyklon-Typ zur Abscheidung von Feststoffpartikeln aus der Umgebungsluft angeordnet ist.

Im Interesse einer kompakten und platzsparenden Konstruktion der vorgeschlagenen Anordnung ist in einer weiteren Ausführung vorgesehen, dass der Gas-Gas-Separator die kaskadierte Anordnung verzweigter Kanäle in mäander-, spiral- oder schraubenförmiger Konfiguration umfasst.

Eine technologisch einfache und kostengünstige Ausführung der Anordnung lässt sich insbesondere dadurch realisieren, dass wobei die kaskadierte Anordnung verzweigter Kanäle aus einem, insbesondere extrudierten, Polymeren gebildet ist.

Vorteile und Zweckmäßigkeiten der Erfindung ergeben sich im Übrigen aus der nachfolgenden Beschreibung von Ausführungsaspekten und -beispielen anhand der Figuren. Von diesen zeigen:
- Fig. 1: eine Prinzipskizze zur Erläuterung der Erfindung und
- Fig. 2: eine Prinzipskizze einer bevorzugten Ausführung der Erfindung.

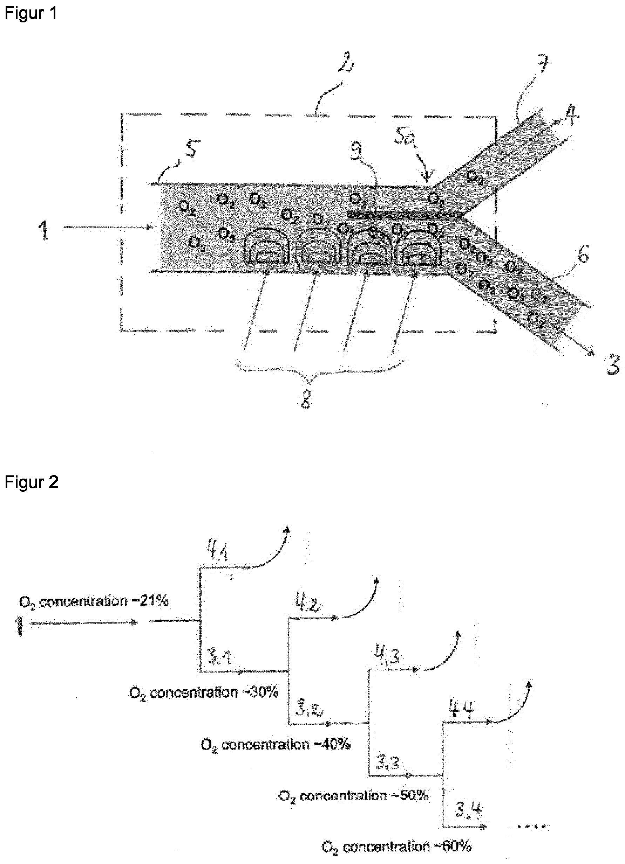

Fig. 1 zeigt schematisch, wie Umgebungsluft 1 in einem (exemplarisch als einstufig dargestellten) Gas-Gas-Separator 2 zu Prozessgas 3 für eine Brennstoffzelle verarbeitet wird. Hierbei entsteht Abluft 4, die in die Umgebung zurückgeführt wird. Der Gas-Gas-Separator umfasst im dargestellten einfachen Beispiel einen zu Zuluftkanal 5, der an einem Verzweigungspunkt 5a in einen Nutzstromkanal 6 und einen Abluftkanal 7 verzweigt ist. Stromaufwärts des Verzweigungspunktes 5a sind an einer Seite des Zuluftkanals 5 mehrere Permanentmagnete 8 vorgesehen, und über einem Teil von diesen, nahe dem Verzweigungspunkt 5a, ist eine Trennplatte 9 angeordnet.

In dem durch die Permanentmagnete 8 erzeugten inhomogenen, hinsichtlich des Zuluftkanals 5 asymmetrischen Magnetfeld werden die Sauerstoffmoleküle in der Zuluft 1 zur (in der Figur) unteren Seite des Zuluftkanals 5 hin abgelenkt und bilden ein mit Sauerstoff angereichertes und zugleich mit Kohlenmonoxid (nicht dargestellt) abgereichertes Prozessgas, welches durch die Trennplatte 9 mechanisch unterstützt als Nutz-Teilstrom (Prozessgas) 3 in den Nutzstromkanal 6 gelangt. Der in der Figur obere Teil der Zuluft, in dem Sauerstoff abgereichert und Kohlenmonoxid angereichert ist, gelangt - wiederum unterstützt durch die Trennplatte 9 - als Abluft 4 in den Abluftkanal 7.

In der Figur nicht gezeigt ist ein eingangsseitig des Gas-Gas-Separators 2 vorzusehender Kompressor, der die Umgebungsluft 1 in den Gas-Gas-Separator drückt, und die Brennstoffzelle, deren Oxidationsgas-Eingang mit dem Kanal 6 verbunden ist.

Fig. 2 zeigt schematisch eine kaskadierte Anordnung von Kanalstrukturen der in Fig. 1 gezeigten, Art, wobei die in den einzelnen Stufen der kaskadierten Anordnung jeweils zu erreichenden Sauerstoffanreicherungen exemplarisch angegeben sind. Während die Anordnung hier beispielhaft vierstufig dargestellt ist, versteht es sich, dass mehr als vier Stufen vorgesehen und technisch sinnvoll sein können.

In der praktischen Ausführung ist das Strömungskanal-Design dahingehend optimiert, dass der Druckabfall in den verzweigten Kanälen und somit über das Gesamtsystem minimiert ist. Hierzu können insbesondere an sich bekannte bionische Strukturen genutzt werden.

Die Ausführung der Erfindung ist nicht auf die oben gezeigten Beispiele und Aspekte beschränkt, sondern im Rahmen der anhängenden Ansprüche in einer Vielzahl weiterer Ausführungen und Kombinationen möglich.

### Bezugszeichenliste

- 1: Umgebungsluft
- 2: Gas-Gas-Separator
- 3, 3.1, 3.2, 3.3, 3.5: Prozessgas
- 4; 4.1, 4.2, 4.3, 4.4: Abluft
- 5: Zuluftkanal
- 5a: Verzweigungspunkt
- 6: Nutzstromkanal
- 7: Abluftkanal
- 8: Permanentmagnete
- 9: Trennplatte

## Patentansprüche

1. Verfahren zum Betreiben einer Brennstoffzelle, insbesondere zum Einsatz in einem Straßenfahrzeug, wobei ein sauerstoffhaltiges Prozessgas der Brennstoffzelle zugeführt wird, welches aus Umgebungsluft durch gleichzeitige Anreicherung von Sauerstoff und Abreicherung von als Katalysatorgift wirkenden Bestandteilen der Umgebungsluft, insbesondere Kohlenmonoxid, mittels Gas-Gas-Separation unter Nutzung der paramagnetischen Eigenschaften des Sauerstoffs und der nicht-paramagnetischen Eigenschaften des Katalysatorgift-Bestandteils durch ein Hindurchleiten durch ein inhomogenes Magnetfeld gewonnen wird.

2. Verfahren nach Anspruch 1, wobei die Umgebungsluft kaskadenartig mehrfach in Teilströme unterteilt und vor jedem Verzweigungspunkt durch ein über den Stromquerschnitt inhomogenes Magnetfeld geführt wird, derart, dass jeweils ein Nutz-Teilstrom gebildet wird, in dem der paramagnetische Sauerstoff angereichert und der als Katalysatorgift wirkende nicht-paramagnetische Bestandteil abgereichert sind, und der letzte Nutz-Teilstrom als Prozessgas der Brennstoffzelle zugeführt wird.

3. Verfahren nach Anspruch 2, wobei mindestens ein Teil der Nutz-Teilströme derart gebildet wird, dass in ihnen zugleich der Gehalt an Feststoffpartikeln verringert ist.

4. Verfahren nach Anspruch 2, wobei vor der Unterteilung der Umgebungsluft in Teilströme Feststoffpartikel abgeschieden werden.

5. Verfahren nach Anspruch 3 oder 4, wobei die Verringerung des Gehalts bzw. die Abscheidung der Feststoffpartikel unter Nutzung der Schwerkraft oder des Zyklon-Effekts ausgeführt wird.

6. Brennstoffzellenanordnung, insbesondere zum Einsatz in einem Straßenfahrzeug, aufweisend:
a) eine Brennstoffzelle mit einem ersten Eingang zur Zuführung von Wasserstoff und einem zweiten Eingang zur Zuführung eines sauerstoffhaltigen Prozessgases und
b) einen Gas-Gas-Separator mit einem Eingang zur Zuführung von Umgebungsluft und Magnetmitteln zur Erzeugung mindestens eines inhomogenen Magnetfeldes, durch das die Umgebungsluft geleitet wird, zur gleichzeitigen Anreicherung des paramagnetischen Sauerstoffs und Abreicherung eines als Katalysatorgift wirkenden nicht-paramagnetischen Bestandteils, insbesondere Kohlenmonoxid, zur Bereitstellung des sauerstoffhaltigen Prozessgases am zweiten Eingang der Brennstoffzelle.

7. Brennstoffzellenanordnung nach Anspruch 6, wobei der Gas-Gas-Separator eine kaskadierte Anordnung verzweigter Kanäle umfasst, wobei stromaufwärts des Verzweigungspunktes jeder Stufe Magnetmittel zur Erzeugung eines über den Kanalquerschnitt inhomogenen Magnetfeldes und hierdurch zur gleichzeitigen Anreicherung des Sauerstoffs und Abreicherung des als Katalysatorgift wirkenden Bestandteils in einem jeweiligen ersten Kanal zugeordnet sind und wobei der letzte der ersten Kanäle in den zweiten Eingang der Brennstoffzelle führt.

8. Brennstoffzellenanordnung nach Anspruch 7, wobei die Magnetmittel an einer Seite stromaufwärts eines jeweiligen Verzweigungspunktes angeordnete Permanentmagnete umfassen.

9. Brennstoffzellenanordnung nach Anspruch 7, wobei die Magnetmittel mindestens einen stromaufwärts jeweils eines Verzweigungspunktes angeordneten Elektromagneten umfassen.

10. Brennstoffzellenanordnung nach einem der Ansprüche 7 bis 9, wobei mindestens einer der ersten Kanäle im Gas-Gas-Separator derart positioniert und/oder konfiguriert und/oder mit einem Filtermittel versehen ist, dass der Gehalt an Feststoffpartikeln des in ihn einströmenden Teilstroms verringert wird.

11. Brennstoffzellenanordnung nach einem der Ansprüche 7 bis 9, wobei eingangsseitig des Gas-Gas-Separators ein Feststoffabscheider vom Zyklon-Typ zur Abscheidung von Feststoffpartikeln aus der Umgebungsluft angeordnet ist.

12. Brennstoffzellenanordnung nach einem der Ansprüche 7 bis 11, wobei der Gas-Gas-Separator die kaskadierte Anordnung verzweigter Kanäle in mäander-, spiral- oder schraubenförmiger Konfiguration umfasst.

13. Brennstoffzellenanordnung nach einem der Ansprüche 7 bis 12, wobei die kaskadierte Anordnung verzweigter Kanäle aus einem, insbesondere extrudierten, Polymeren gebildet ist.
